# EUROPÄISCHE PATENTSCHRIFT

(11) **EP 1 810 890 B1**
(45) Veröffentlichungstag und Bekanntmachung des Hinweises auf die Patenterteilung: **28.09.2011**
(21) Anmeldenummer: 07000949.3
(22) Anmeldetag: 18.01.2007
(51) Int. Cl.: B60R 21/215, B23K 26/38

(54) **Verfahren zum Erzeugen einer Sollbruchlinie in eine mehrschichtige Airbagabdeckung unter Verwendung eines Lasers**
Method for producing a rupture line in a multilayer air bag cover by using a laser
Procede de production un ligne de rupture dans un recouvrement d'airbag avec un laser

(30) Priorität: 24.01.2006 DE 102006003684
(43) Veröffentlichungstag der Anmeldung: 25.07.2007
(73) Patentinhaber: JENOPTIK Automatisierungstechnik GmbH, 07745 Jena (DE)
(72) Erfinder: Wittenbecher, Wolfgang, 07768 Gumperda (DE); Griebel, Martin, 07743 Jena (DE); Preuß, Norbert, 07743 Jena (DE)
(74) Vertreter: Schaller, Renate

(56) Entgegenhaltungen:
- WO-A-02/26534
- WO-A-99/01317
- DE-A1- 10 227 118
- DE-A1- 19 819 573
- DE-C1- 19 636 429
- DE-U1- 29 511 172
- US-A- 5 968 381

## Beschreibung

Die Erfindung betrifft ein \/erfahren zum Erzeugen einer Sollbruchlinie in eine mehrschichtige Airbagabdeckung, bei der das Material einer Trägerschicht eine höhere Dichte aufweist, als das Material einer angrenzenden Stützschicht, an die eine Dekorschicht grenzt.
Ein solches Verfahren ist gattungsgemäß aus der DE 102 27 118 A1 bekannt.

Es sind eine Vielzahl von Verfahren bekannt, mit denen eine Sollbruchlinie in eine mehrschichtige Airbagabdeckung eingebracht werden kann. Anfänglich kamen als Airbagabdeckung nur die Armaturentafel bzw. die Lenkradnabe zur Abdeckung eines Frontairbags in Frage. Inzwischen ist es Standard, dass auch Türverkleidungen und Sitzpolsterungen einen Seitenairbag, der Fahrzeughimmel einen Kopfairbag oder sogar der Sicherheitsgurt einen Frontairbag, z. B. für die Mitfahrer auf den Rücksitzen abdecken.

Damit hat sich nicht nur die konstruktive Vielfalt der Airbagabdeckungen, sondern auch die Vielfalt der hierfür verwendeten Materialien aus denen Airbagabdeckungen mehrschichtig hergestellt werden, erhöht. Der heute üblichste Schichtaufbau für eine Airbagabdeckung besteht aus einer steifen Trägerschicht, z. B. aus Kunststoff oder einem Naturfaserverbund, einer weichen Stützschicht, z. B. aus Schaumstoff oder einem Abstandsgewirke und einer Dekorschicht, z. B. aus Kunststoff, textilem Gewebe. oder Leder. Bei einem solchen Schichtaufbau ist grundsätzlich die Materialdichte der Trägerschicht deutlich höher als die der Stützschicht.

Auch wenn nicht in allen relevanten Publikationen ausdrücklich erwähnt, soll grundsätzlich eine Sollbruchlinie mit definiertem Aufreißwiderstand hergestellt werden, die seitens des Fahrgastraumes (Dekorseite der Airbagabdeckung) aus ästhetischen Gründen unsichtbar sein soll.

Die aus dem Stand der Technik bekannten relevanten Verfahren zur Herstellung einer solchen Sollbruchlinie unterscheiden sich im Wesentlichen zum einen im technologischen Ablauf der einzelnen Verfahrensschritte und zum anderen durch

Vom technologischen Ablauf her lassen sich die Verfahren einteilen in die Gruppe der Verfahren, bei denen zuerst der Schichtaufbau der Airbagabdeckung hergestellt und anschließend in die vorgefertigte Airbagabdeckung eine Sollbruchlinie eingebracht wird und die Gruppe, in die eine Sollbruchlinie in einzelne Schichten eingebracht wird, bevor diese zusammengefügt werden.

Die unterschiedlichen Schneidtechnoiogien werden im Wesentlichen durch die Anwendung unterschiedlicher Werkzeuge bestimmt. Hierfür kommen mechanische Schneidwerkzeuge oder zerspanende Werkzeuge, Heißmesser, Ultraschallmesser und Laser zur Anwendung.

In den letzten Jahren haben sich insbesondere die Laserverfahren weiterentwickelt und in ihrer Anwendung ausgebreitet. Mit einem Laser wird für einen beschriebenen Schichtaufbau, besonders vorteilhaft, kein mechanischer Druck auf das Werkstück (hier Airbagabdeckung) ausgeübt. Außerdem ist das Werkzeug verschleißfrei, was sich besonders in einer Massenproduktion, wie in der Automobilzulieferindustrie rechnet. Weiterhin ist es von Vorteil, dass durch Auswahl geeigneter Laserparameter, wie Laserleistung und Pulsfrequenz unterschiedliche Abtragregime, wie sie für unterschiedliche Materialzusammenstellungen von Vorteil sein können, auf einfache Weise realisierbar sind. Außerdem kann über die Detektion, der durch das Restmaterial bzw. bei Materialdurchbruch an der Abtragstelle transmittierenden Bearbeitungsstrahlung, der Abtrag geregelt werden.

Bei allen bekannten Laserverfahren des Standes der Technik, bei denen eine Sollbruchlinie in eine vorgefertigte Airbagabdeckung mit einem beschriebenen Schichtaufbau eingebracht wird, wird eine Laserstrahlung seitens der Trägerschicht auf die Airbagabdeckung gerichtet und relativ zur Airbagabdeckung entlang der gewünschten Sollbruchlinie bewegt. Ein Beispiel hierfür ist aus der DE 198 19 573 A1 bekannt.

Es ist auch bekannt, die Art der Laserstrahlung und deren Wellenlänge, die Laserleistung, die Relativgeschwindigkeit, die Pulsdauer und die Pulsfrequenz in Abhängigkeit vom Schichtaufbau auszuwählen und den variierbaren Laserparameter in Abhängigkeit von der Abtragtiefe bzw. der Restwandstärke zu regeln.

Wie bereits erwähnt, muss die Sollbruchlinie einen reproduzierbaren, über ihre Länge definierten Aufreißwiderstand aufweisen.
Der Aufreißwiderstand sollte einerseits gering sein, damit die Sollbruchlinie im Falle der Aktivierung des Airbags mit einer nur geringen Aufreißkraft zerstört werden kann, andererseits darf die Sollbruchlinie nicht bereits bei einer unkontrollierten zufälligen Krafteinwirkung seitens des Fahrgastraumes brechen. In Abhängigkeit von einem entsprechend geeignetem Aufreißwiderstand sowie den Materialeigenschaften und Materialdicken der einzelnen Schichten, wird ein Abtragsregime ausgewählt. Dabei sind die verbleibenden Materialstege in den unterschiedlichen Schichten, deren Breiten und Abstände sowie die Abtragtiefe für den Aufreißwiderstand über die Sollbruchlinie, bestimmend.

Neben einem angemessenen reproduzierbaren Aufreißwiderstand kommt es auch darauf an, eine langzeitstabile Unsichtbarkeit der Sollbruchlinie zu gewährleisten. Das heißt einerseits, dass die Dekorschicht durch eine zu große Abtragstiefe nicht zu stark geschwächt werden darf und andererseits die Stützschicht soweit als möglich erhalten bleiben muss.

Um dieses Problem zu lösen, ist es z. B. aus der DE 196 36 429 C1 und der WO 02/26534 A1 bekannt, die Schwächelinie durch aneinandergereihte Sacklöcher zu erzeugen. Die Sacklöcher erstrecken sich vollständig durch die Trägerschicht und die Stützschicht bis auf eine verbleibende Restwandstärke in die Dekorschicht hinein. Anstelle von Sacklöchern kann auch, wie aus der WO 99/01317 A1 bekannt, mit Mikroperforationslöchern, die mit bloßem Auge nicht wahrnehmbar sind, eine den Ansprüchen genügende Sollbruchlinie erzeugt werden.

Praktische Erfahrungen haben jedoch ergeben, dass diese Sacklöcher bzw. Mikroperforationslöcher nur im Bereich der Tragerschicht einen nahezu konstanten Durchmesser haben. Im Bereich der Stützschicht erfahren die Sacklöcher eine blasenähnliche, deutlich große Ausdehnung. Das vergrößerte Abtragsvolumen in der Stützschicht lässt sich insbesondere durch die gegenüber der Trägerschicht wesentlich geringere Materialdichte erklären. Zusätzlich zur Verdampfung durch den Laser fördern die heißen Verbrennungsgase die Verdampfung des Materials. Die Verbrennungsgase, die nur in geringem Maße über die Öffnung des jeweiligen Sackloches in der Trägerschicht entweichen können, verdrängen durch ihren Druck in Verbindung mit ihrer Temperatur, die die Erweichung der Stützschicht beschleunigt, die Stützschicht großräumig.

Um also Stege in der Stützschicht mit einer wirksamen Mindestbreite zwischen den einzelnen Sacklöchern zu erhalten, muss ein bestimmter Mindestabstand der Lochmitten gegeben sein, der größer dem maximalen Durchmesser der Sacklöcher im Bereich der Stützschicht ist. Für Dekorschichten mit einer hohen Reißfestigkeit kann dieser Abstand zu groß sein, um eine Schwächelinie mit dem gewünschten Aufreißwiderstand zu erzeugen.

Um dieses Problem zu lösen, beschreibt die Anmelderin in ihrer Patentanmeldung DE 102 27 118 A1, dass man gezielt Gruppen von Sacklöchern unterschiedlicher Tiefe erzeugt. Eine erste Gruppe erstreckt sich nur in die Trägerschicht, sodass die darunter liegende Stützschicht erhalten bleibt und einen breiten Steg als Stütze für die Dekorschicht bildet. Eine zweite Gruppe durchdringt die Stützschicht in die Dekorschicht hinein. Die Abstände der Lochmitten können so klein gewählt werden, dass lediglich in der Dekorschicht Stege erhalten bleiben. Von diesem Abstand unabhängig wird bei diesem Abtragsregime die Stützschicht zerstört. D. h. ein kleinerer Abstand bringt eine höhere Schwächung der Dekorschicht, ohne dass dies Auswirkung auf die Stützwirkung durch die Stützschicht hat.

Auch bei diesem Verfahren kann die Schwächung bei sehr reißfesten Dekorschichten nicht befriedigend sein.

Aus der US 5,968,381 ist ein Verfahren zum Einbringen einer Sollbruchlinie mittels Laser in eine ein- oder zweischichtige Airbagabdeckung bekannt. Da es sich hier um keine Perforationslinie, sondern eine kontinuierliche Schnittlinie handelt, bleiben entlang der Sollbruchlinie ohnehin keine Materialstege erhalten, die es durch besondere Maßnahmen zu begünstigen gilt. Die Breite des Materialabtrages wird hier wie bei allen anderen im Stand der Technik gewürdigten Schriften durch den Strahidurchmesser der Laserstrahiung bestimmt, mit der die Sollbruchlinie über ihre gesamte Tiefe gefertigt wird.

Der Erfindung liegt die Aufgabe zugrunde, ein Verfahren unter Verwendung eines Lasers zu schaffen, mit dem in eine mehrschichtige Airbagabdeckung eine Sollbruchlinie in Form einer Perforationslinie in eine abschließende Dekorschicht erzeugt werden kann, bei dem vergleichsweise gegenüber bekannten Verfahren trotz geringerer Abstände der Lochmitten breitere Stege in einer angrenzenden Stützschicht erhalten bleiben.
Diese Aufgabe wird erfindungsgemäß mit den Merkmalen des Anspruches 1 gelöst. Vorteilhafte Ausführungen sind in den Unteransprüchen ausgeführt.

Es ist erfindungswesentlich, dass der Abtrag entlang der Sollbruchlinie in der Trägerschicht gezielt breiter ausgeführt wird, als der zur Bearbeitung der Dekorschicht auf die Airbagabdeckung, genauer die Stützschicht, auftreffende Strahldurchmesser a ist, damit die bei der Verdampfung bzw. Verbrennung der Stützschicht und auch der Dekorschicht entstehenden Verbrennungsgase entweichen können und nicht zu unerwünscht großen Hohlräumen in der Stützschicht führen. Vorzugsweise ist die Breite b des Abtrags größer als der doppelte Strahldurchmesser a. Ab welcher konkreten Breite ein minimales Verbrennungsvolumen und damit ein minimaler Hohlraum in der Stützschicht entsteht, kann durch nur wenige praktische Versuche schnell ermittelt werden. Bestimmend für die Geschwindigkeit der Gasentwicklung und die Menge des entstehenden Verbrennungsgasvolumens sind insbesondere die Materialeigenschaften der Stützschicht und deren Dicke.

Praktisch kann man in einem ersten Versuch die mit der Dekorschicht verbundene Stützschicht, ohne Trägerschicht lasern. Das hierbei entstehende Verbrennungsvolumen bildet für die nachfolgenden Versuche eine Richtgröße für das minimal erreichbare Verbrennungsvolumen.
In nachfolgenden Versuchen, in denen der komplette Schichtaufbau gelasert wird, kann man zuvor schrittweise die Trägerschicht mit zunehmend größeren Durchbrüchen versehen. So nähert man sich schrittweise einer Durchbruchsgröße, die den Träger noch nicht zu stark schwächt aber das Verbrennungsgas ausreichend schnell entweichen lässt.

Die Durchbrüche können als einzelne Löcher ausgeführt werden, deren Lochmittenabstände gleich denen der Sacklöcher in der Dekorschicht sind. Die Lochmittenabstände können aber auch kleiner der Breite b sein, sodass sich die Löcher überlappen und zwischen den Löchern kein Steg in der Trägerschicht verbleibt. Eine verbleibenen Stegbreite zumindest zwischen einzelnen, sich überlappenden Lochgruppen, kann jedoch als stabilisierende Verbindung in der Trägerschicht von Nutzen sein. Es bietet sich dann an, die Durchbrüche nicht über ihre Länge entlang der Sollbruchlinie größer zu gestalten, sondern über deren Breite b. Eine zunehmende Breite b hat im Unterschied zur zunehmenden Länge keine Auswirkung auf den Aufreißwiderstand der Trägerschicht, vergrößert aber die Öffnung im gleichen Maße.

Der Abtrag in der Trägerschicht und der Dekorschicht kann zeitgleich, zeitlich überlappend oder auch zeitlich nacheinander erfolgen.
Dabei muss die Trägerschicht zwingend über ihrer Dicke vollständig abgetragen werden. Vorteilhaft bleibt die Stützschicht von diesem Abtrag unbeeinflusst. Bei dickeren Stützschichten wirkt sich jedoch hierbei ein geringfügiger Abtrag, auch der Stützschicht, nicht nachteilig aus.

Die Erfindung soll nachfolgend anhand von Ausführungsbeispielen näher erläutert werden.
Hierzu zeigen:
- Fig.1 1: eine Prinzipskizze eines Schnittbildes einer erfindungsgemäß bearbeiteten Airbagabdeckung
- Fig. 2: eine Prinzipskizze einer Draufsicht einer erfindungsgemäß bearbeiteten Airbagabdeckung
- Fig.3: die Strahlprofile zweier Laser gemäß einem ersten Ausführungsbeispiel
- Fig. 4: die Strahlprofile zweier Laser gemäß einem zweiten Ausführungsbeispiel

Das erfindungsgemäße Verfahren dient der Bearbeitung einer mehrschichtigen Airbagabdeckung mit einer steifen Trägerschicht 1 und einer darauffolgenden Stützschicht 2, wie sie in der Beschreibung des Standes der Technik näher ausgeführt wurden. Die Stützschicht 2 ist im Vergleich zum Material der Trägerschicht 1 aus einem Material geringerer Dichte. Die Stützschicht 2 wird von mindestens einer weiteren Schicht, der Dekorschicht 3, gefolgt.

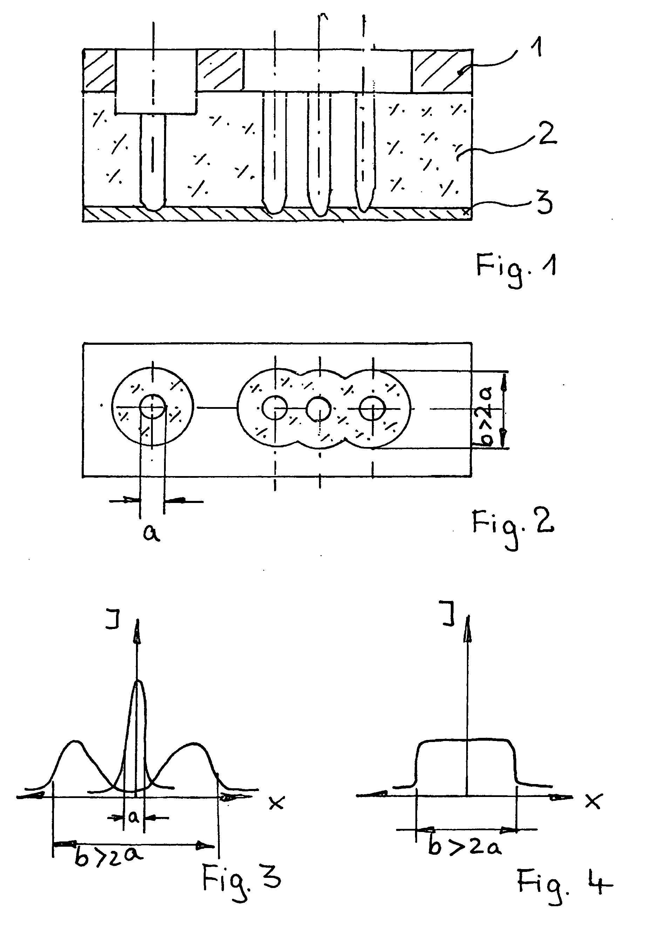

In einem ersten Ausführungsbeispiel sollen der Abtrag in der Trägerschicht 1 und der Abtrag in der Dekorschicht 3 zeitgleich erfolgen, d. h. der Abtrag in der Trägerschicht 1, in der Stützschicht 2 und in der Dekorschicht 3 erfolgt an einem Ort zeitlich unmittelbar nacheinander. Zur Bearbeitung der Trägerschicht 1 wird eine Laserstrahlung mit einer aufgeweiteten ringförmigen Strahlungsdichteverteilung gewählt, dessen Strahlung koaxial zu einer Laserstrahlung mit gaußförmiger Strahlungsdichteverteilung auf die Trägerschicht 1 gerichtet wird (s. Fig. 3). Beide Laserstrahlungen wirken zeitgleich auf die Airbagabdeckung ein. Nachdem die Trägerschicht 1 in Zusammenwirkung beider Laserstrahlungen über ihrer Schichtdicke vollständig an diesem Ort in Form eines runden Loches mit einem Durchmesser größer 2 a abgetragen ist, wird der Laser abgeschalten und es wird der Abtrag durch die Stützschicht 2 in die Dekorschicht 3 hinein mit dem zweiten Laser fortgesetzt, dessen Strahlquerschnitt im Einwirkungsbereich einen Durchmesser von a hat (s. Fig. 1 und 2). Es ist dem Fachmann Klar, dass der Durchmesser a, der idealerweise gleich dem Fokusdurchmesser der Laserstrahlung ist, über die Gesamtdicke der Airbagabdeckung nicht ideal konstant ist. Diese Abweichungen sind jedoch vergleichsweise vernachlässigbar.

In einem zweiten Ausführungsbeispiel soll für den Abtrag im Träger ein Laser mit einem Top-Head-Strahlprofil verwendet werden (s. Fig. 4). Der Abtrag in der Dekorschicht 3 erfolgt zeitversetzt.
Durch einen überlappenden Abtrag im Träger entsteht ein Durchbruch, der im Unterschied zum ersten Ausführungsbeispiel keine annähernd runde Lochform aufweist, sondern in Richtung der Sollbruchlinie stärker ausgedehnt ist, d. h. ein Durchbruch in Schlitzform (siehe rechte Darstellung in Fig. 1 und 2). Die Durchbrüche in der Trägerschicht können alternativ in Loch- oder Schlitzform ausgeführt sein oder auch die Formen innerhalb einer Sollbruchlinie kombiniert werden.

Das zeitversetzte Lasern der Dekorschicht 3 hat zum einen den Vorteil, dass sich die beim Abtrag des Trägermaterials entwickelten Verbrennungsgase am jeweiligen Abtragungsort bereits verflüchtigt haben und dass über die Länge des schlitzförmigen Abtrags die Anzahl der Sacklöcher unabhängig vom Abtrag der Trägerschicht 1 gewählt werden kann.

In einem dritten Ausführungsbeispiel soll der Abtrag zeitlich nacheinander erfolgen. Vorteilhaft ist hierfür, dass nicht zwingend zwei Laser benötigt werden und dass in einem Schlitz, der z. B. durch 10 sich überlappende lochförmige Durchbrüche gebildet wird, auch mehr als 10 Sacklöcher bzw. Perforationslöcher mittels Laser eingebracht werden können.. Bei einer Bearbeitung des Trägers mit Laserstrahlungen, wie sie in den beiden ersten Ausführungsbeispielen beschrieben wurden, kann das Strahlprofil des ohnehin für den Abtrag in der Dekorschicht 3 notwenigen Lasers mit Gauß-Verteilung, durch vorgeordnete Spezialoptiken, z. B. einem Axicon, welches aus einer gaußförmigen Strahldichteverteilung eine ringförmige Strahldichteverteilung formt, modifiziert werden.
Es kann auch der Laser mit seiner gaußförmigen Strahldichteverteilung verwendet werden, wenn er entsprechend defokussiert auf das Trägermaterial gerichtet wird. Bei Verwendung eines Lasers zum Abtrag in der Trägerschicht 1, kann es unabhängig vom Strahlprofil von Vorteil sein, dass bei der dem Verfahren vorgeordneten Herstellung der Airbagabdeckung zwischen der Trägerschicht 1 und der Stützschicht 2 eine folienartige Barriereschicht eingebracht wird, die die Funktion hat, während des Abtrages des Trägermaterials das Eindringen der Laserstrahlung in die Stützschicht 2 zu verhindern. Vorteilhaft ist diese Barriereschicht gasdurchlässig. Damit die Barriereschicht während des Abtrages des Trägermaterials unbeschädigt bleibt, muss für die Barriereschicht ein Material gewählt werden, dessen Schmelztemperatur über der Verdampfungstemperatur des Trägermaterials liegt.
Wenn die Barriereschicht nicht gasdurchlässig ist, muss sie nach dem Abtrag des Trägermaterials zerstört werden. Das kann mit dem Abtrag der Dekorschicht 3 erfolgen durch den punktuell höheren Energieeintrag in der Strahlungsspitze des Lasers oder durch eine mechanische Zerstörung, z. B. mittels Messer. Ein Aufschlitzen ist hierbei ausreichend, damit durch den Druck der Verbrennungsgase die Barriereschicht auseinander geblasen wird und das Verbrennungsgas entweichen kann.

Anstelle des Lasers zum Abtrag der Trägerschicht 1 kann auch für alle drei Zeitregime, wie sie in den Ausführungsbeispielen genannte wurden, ein spanabhebendes Werkzeug verwendet werden. Für einen zeitgleichen Abtrag kann z. B. ein Spezialfräser verwendet werden, der einen hohlen Kern aufweist, durch den die Laserstrahlung gerichtet werden kann. Für den zeitlich versetzten und den zeitlich nacheinander stattfindenden Abtrag können insbesondere konventionelle Bohrer oder Fräser verwendet werden.

## Patentansprüche

1. Verfahren zum Erzeugen einer Sollbruchlinie in eine mehrschichtige Airbagabdeckung mit einer Trägerschicht (1), einer Stützschicht (2) und einer Dekorschicht 3, wobei das Material der Trägerschicht (1) eine höhere Dichte aufweist, als das Material der Stützschicht (2), bei dem mittels eines Lasers, der mit einem Strahldurchmesser (a) auf die Airbagabdeckung auftrifft und eine gaußförmigen Strahldichteverteilung aufweist, entlang einer gewünschten Sollbruchlinie beabstandete Sacklöcher bzw. Mikroperforationslöcher in die Dekorschicht (3) erzeugt werden, **dadurch gekennzeichnet,**
**dass** das Material der Trägerschicht (1) entlang der Sollbruchlinie vollständig, wenigstens in den Abständen der beabstandeten Sacklöcher bzw. Mikroperforationslöcher über eine Breite (b) abgetragen wird, wobei der Abtrag über die Breite (b) größer als ein Abtrag mit dem Strahldurchmesser (a) ist und der Laser durch die geschaffenen Durchbrüche in der Trägerschicht (1) hindurch die beabstandeten Sacklöcher bzw. Mikroperforationslöcher erzeugt, wobei die entstehenden Verbrennungsgase durch die Durchbrüche entweichen können.

2. Verfahren nach Anspruch 1, **dadurch gekennzeichnet,**
**dass** die Breite (b) größer als der zweifache Strahldurchmesser (a) ist.

3. Verfahren nach Anspruch 1 oder 2, **dadurch gekennzeichnet,**
**dass** die Durchbrüche eine Schlitzform aufweisen.

4. Verfahren nach Anspruch 1 oder 2, **dadurch gekennzeichnet,**
**dass** die Durchbrüche eine runde Lochform, dessen Durchmesser gleich der Breite (b) ist, aufweisen.

5. Verfahren nach Anspruch 3, **dadurch gekennzeichnet,**
**dass** die Durchbrüche mit einem Fräser hergestellt werden.

6. \/erfahren nach Anspruch 4, **dadurch gekennzeichnet,**
**dass** die Durchbrüche mit einem Bohrer hergestellt werden.

7. Verfahren nach Anspruch 1 bis 4, **dadurch gekennzeichnet,**
**dass** die Durchbrüche mit einem Laser hergestellt werden.

8. Verfahren nach Anspruch 7, **dadurch gekennzeichnet,**
**dass** die Laserstrahlung im Profil eine Top-Head-Form darstellt.

9. Verfahren nach Anspruch 7, **dadurch gekennzeichnet,**
**dass** die Laserstrahlung zur Herstellung der Durchbrüche eine Strahldichteverteilung aufweist, die im Profil eine Ringform darstellt.

10. Verfahren nach Anspruch 7, **dadurch gekennzeichnet,**
**dass** die Laserstrahlung zur Herstellung der Durchbrüche eine Strahldichteverteilung aufweist, die im Profil eine Gaußform darstellt und die Laserstrahlung defokussiert auf den Träger trifft.

11. Verfahren nach Anspruch 7, **dadurch gekennzeichnet,**
**dass** bei der Herstellung der Airbagabdeckung zwischen der Trägerschicht und der Stützschicht (2) eine Barriereschicht eingebracht wird, die einen Energieeintrag in die Stützschicht (2) während der Bearbeitung der Trägerschicht (1) verhindert.

12. Verfahren nach Anspruch 11, **dadurch gekennzeichnet,**
**dass** für die Barriereschicht ein gasdurchlässiges Material verwendet wird.

## Claims

1. A method for generating a predetermined break line in a multi-layer airbag cover with a carrier layer (1), a supporting layer (2) and a decorative layer (3), wherein the material of the carrier layer (1) has a greater density than the material of the supporting layer (2); wherein blind holes or microperforations which are spaced apart along a desired predetermined break line are generated in the decorative layer (3) by a laser which impinges upon the airbag cover with a beam diameter (a) and which has a Gaussian radiance distribution, **characterised in that**
the material of the carrier layer (1) is completely ablated over a width (b) along the predetermined break line at least in the spaces between the spaced blind holes or microperforations, where the ablation over the width (b) is greater than an ablation with the beam diameter (a), and the laser generates the spaced blind holes or microperforations through the breakthroughs created in the carrier layer (1), allowing the combustion gases that occur to escape through the breakthroughs.

2. The method according to claim 1, **characterised in that** the width (b) is greater than twice the beam diameter (a).

3. The method according to claim 1 or 2, **characterised in that** the breakthroughs are slit-shaped.

4. The method according to claim 1 or 2, **characterised in that** the breakthroughs have a round hole shape whose diameter is equal to the width (b).

5. The method according to claim 3, **characterised in that** the breakthroughs are produced by a cutter.

6. The method according to claim 4, **characterised in that** the breakthroughs are produced by a drill.

7. The method according to claims 1 to 4, **characterised in that** the breakthroughs are produced by a laser.

8. The method according to claim 7, **characterised in that** the profile of the laser beam has a top hat shape.

9. The method according to claim 7, **characterised in that** the laser beam for producing the breakthroughs has a radiance distribution whose profile is ring-shaped.

10. The method according to claim 7, **characterised in that** the laser beam for producing the breakthroughs has a radiance distribution whose profile is Gaussian, and the laser beam impinges on the carrier in a defocused manner.

11. The method according to claim 7, **characterised in that** a barrier layer is introduced between the carrier layer and the supporting layer (2) when producing the airbag cover, said barrier layer preventing energy from being introduced into the supporting layer (2) during the machining of the carrier layer (1).

12. The method according to claim 11, **characterised in that** a material which is permeable to gas is used for the barrier layer.

## Revendications

1. Procédé de réalisation d'une ligne de rupture déterminée dans un recouvrement d'airbag multi-couches, ce dernier comprenant une couche de support (1), une couche d'appui (2) et une couche décorative (3), le matériau de la couche de support (1) présentant une densité supérieure à celle du matériau de la couche d'appui (2), ledit procédé comprenant les étapes de réalisation de trous borgnes ou micro-perforations qui sont écartés selon une ligne désirée de rupture déterminée dans la couche décorative (3) par un laser qui est incident sur le recouvrement d'airbag avec un diamètre de faisceau (a) et qui présente une distribution de radiance gaussienne, **caractérisé en ce que**
le matériau de la couche de support (1) est complètement enlevé sur une largeur (b) selon la ligne de rupture déterminée au moins dans les espaces entre les trous borgnes ou micro-perforations écartés, l'enlèvement sur la largeur (b) étant supérieure à un enlèvement sur le diamètre du faisceau (a), et **en ce que** le laser produit des trous borgnes ou micro-perforations écartés à travers les ruptures réalisées dans la couche de support (1), permettant l'échappement, à travers ces ruptures, des gaz de combustion produits.

2. Procédé selon la revendication 1, **caractérisé en ce que** la largeur (b) est supérieure à deux fois le diamètre du faisceau (a).

3. Procédé selon la revendication 1 ou 2, **caractérisé en ce que** les ruptures se présentent sous la forme de fentes.

4. Procédé selon la revendication 1 ou 2, **caractérisé en ce que** les ruptures se présentent sous la forme de trous ronds dont le diamètre est égal à la largeur (b).

5. Procédé selon la revendication 3, **caractérisé en ce que** les ruptures sont réalisées par une fraise.

6. Procédé selon la revendication 4, **caractérisé en ce que** les ruptures sont réalisées par un foret.

7. Procédé selon les revendications 1 à 4, **caractérisé en ce que** les ruptures sont réalisées par un laser.

8. Procédé selon la revendication 7, **caractérisé en ce que** le contour du faisceau présente une forme top hat.

9. Procédé selon la revendication 7, **caractérisé en ce que** le faisceau laser pour la réalisation des ruptures présente une distribution de radiance dont le contour est annulaire.

10. Procédé selon la revendication 7, **caractérisé en ce que** le faisceau laser pour la réalisation des ruptures présente une distribution de radiance dont le contour est gaussien, et le faisceau laser est incident sur le support de manière défocalisée.

11. Procédé selon la revendication 7, **caractérisé en ce qu'**une couche barrière est introduite entre la couche de support et la couche d'appui (2) lors de la manufacture du recouvrement airbag, ladite couche barrière empêchant un apport d'énergie dans la couche d'appui (2) lors de l'usinage de la couche de support (1).

12. Procédé selon la revendication 11, **caractérisé en ce que** l'on utilise pour la couche barrière un matériau perméable aux gaz.
